# EUROPEAN PATENT APPLICATION

(11) **EP 1 283 628 A1**
(43) Date of publication of application: **12.02.2003**
(21) Application number: 01440216.8
(22) Date of filing: 11.07.2001
(51) Int. Cl.: H04L 29/06

(54) **Data terminal activation and control device, WAP server and method for enabling a WAP radiotelephone terminal to remotely activate and control a distant data terminal**

(71) Applicant: ALCATEL, 75008 Paris (FR)
(72) Inventor: de Loye, Martin, 92310 Sevres (FR); Deprun, Jean Francois, 75010 Paris (FR)
(74) Representative: Dreiss, Fuhlendorf, Steimle & Becker

(57) **Abstract**

The invention refers to a data terminal activation and control device (16), a WAP server and a method for enabling a WAP radiotelephone terminal (20) to remotely activate and control a distant data terminal (14). The data terminal (14) is coupled to the activation and control device (16) by means of a data transmission network (26). The activation and control device (16) is coupled to the radiotelephone terminal (20) across a radiotelephone network (24). To permit to a user (18) of a WAP radiotelephone terminal (20) a convenient and powerful access to a data terminal (14) in order to activate and control the data terminal (14) it is suggested, to send a WAP message from the radiotelephone terminal (20) to the activation and control device (16) across the radiotelephone network (24) ; to convert the WAP message into a message that can be interpreted by the data terminal (14), and to send it to said data terminal (14) ; and to convert a message supplied by the data terminal (14) into a WAP message and to send it to the WAP radiotelephone terminal (20).

## Description

The present invention refers to a data terminal activation and control device for enabling a WAP (Wireless Application Protocol) radiotelephone terminal to remotely activate and control a distant data terminal. The data terminal is coupled to the activation and control device by means of a data transmission network. The activation and control device is coupled to the radiotelephone terminal across a radiotelephone network.

The invention further refers to a WAP (Wireless Application Protocol) server for enabling a WAP radiotelephone terminal to remotely activate and control a distant data terminal. The data terminal is coupled to the server by means of a data transmission network. The server is coupled to the radiotelephone terminal by means of a gateway across a radiotelephone network.

Finally, the present invention relates to a method for remotely activating and controlling a distant data terminal by means of a WAP (Wireless Application Protocol) radiotelephone terminal.

A method and a data terminal activation and control device of the kind mentioned above is known from US 5,892,432. The basic idea disclosed in this document is to establish a data transmission connection between a first data terminal and a second data terminal and to transmit data across the data transmission connection. The connection buildup is initiated by the first data terminal using paging resources. The first data terminal sends a paging message to the activation and control device, which makes the second data terminal build up the data transmission connection between the two data terminals. Then data is transmitted between the two data terminals across the data transmission connection.

However, the method and the activation and control device disclosed in US 5,892,432 do not provide a convenient and powerfull access to a data terminal for activating and controlling the data terminal from a WAP radiotelephone terminal.

Therefore, it is an object of the present invention to provide a convenient and powerfull access to a data terminal to the user of a WAP radiotelephone terminal in order to activate and control the data terminal from the WAP radiotelephone terminal.

According to the present invention this object is solved by a data terminal activation and control device of the above-mentioned kind, comprising:
- means for coupling the activation and control device to said data transmission network;
- means for coupling the activation and control device to said radiotelephone network;
- means for converting a message supplied by the data terminal into a WAP message and sending it to the radiotelephone terminal; and
- means for converting a WAP message supplied by the radiotelephone terminal into a message that can be interpreted by the data terminal, and sending it to said data terminal.

The basic idea of the present invention is to fully control a data terminal from a WAP radiotelephone terminal. The data terminal may be any kind of computer from a PC (Personal Computer) up to a mainfraim system. It may be disposed in an office or at home. The activation and control device comprises gateway and server functions. It can issue commands depending on the content of the WAP messages to the data terminal. Additionally the activation and control system understands requests for pushing information in particular WAP messages to the radiotelephone terminal. The content of these messages pused to the radiotelephone terminal preferably depends on the status of the data terminal and/or on the status of command execution. This permits a very convenient and powerful control of the data terminal.

In operation, the radiotelephone terminal calls a gateway within the activation and control device and issues commands for the data terminal. These commands are forwarded from the gateway to the server located within the activation and control device. The commands are processed in the server and then forwarded to the data terminal. The data terminal executes the commands received.

The present invention can be used for home office applications. The radiotelephone terminal allows control of a data terminal disposed in an office from any desired location. The invention can also be used for long-range maintanance of machines or other facilities.

According to an advantageous embodiment of the present invention it is suggested that the data transmission network is a LAN (Local Area Network). The LAN can connect at least some of the data terminals of a company. Additionally servers and/or gateways for connecting the LAN to other networks, e. g. to the radiotelephone network, can be coupled to the LAN.

It is suggested that the radiotelephone network is a GSM (Global System for Mobile communication) network. Alternatively the radiotelephone network is a UMTS (Universal Mobile Telecommunication Standard) network. The WAP messages are transmitted across the radiotelephone network.

According to a preferred embodiment of the present invention it is suggested that the means for converting the WAP message comprise a WAP server. Further, it is suggested that the means for converting the message comprise a WAP server.

According to a preferred embodiment, the WAP server comprises means for storing various scripts for controlling the data terminal, means for selecting at least one of the scripts depending on the content of the WAP message and means for executing the at least one selected script in order to control the distant data terminal. The means for storing may be electronic, optical or magnetic data storing devices (e. g. hard disk, CD-ROM). Alternatively they may be memory devices (e. g. RAM, ROM or flash-memory).

According to another solution of the object of the present invention a WAP server of the above-mentioned kind is suggested comprising:
- means for storing various scripts for controlling the data terminal,
- means for selecting at least one of the scripts depending on the content of a WAP message supplied by the radiotelephone terminal accross the radiotelephone network; and
- means for sending commands contained in the at least one selected script in order to control the distant data terminal.

According to yet another solution of the object of the present invention a method of the above-mentioned kind is suggested comprising the steps of:
- sending a WAP message from the radiotelephone terminal to a data terminal activation and control device across a radiotelephone network;
- converting the WAP message into a message that can be interpreted by the data terminal, and sending it to said data terminal; and
- converting a message supplied by the data terminal into a WAP message and sending it to the WAP radiotelephone terminal.

For a more complete understanding of the present invention and the advantages thereof, reference is now made to the following description taken in conjunction with the accompanying drawings, wherein like reference numerals represent like parts, in which:
- Fig. 1: illustrates a block diagram of a remote access facilitation network for the realization of the method according to the present invention; and
- Fig. 2: illustrates a block diagram of a data terminal activation and control device according to the present invention used in the remote access facilitation network.

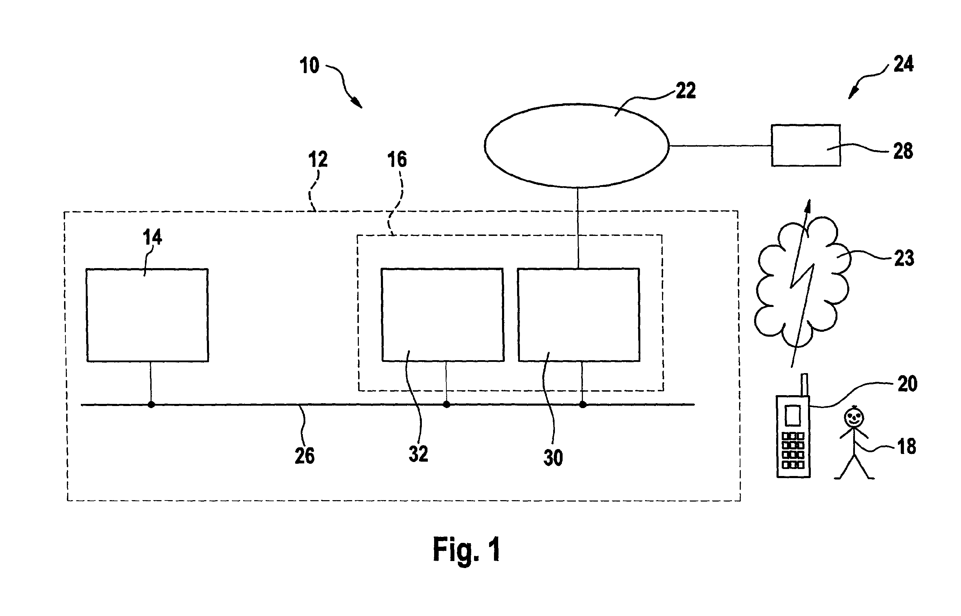

Figure 1 is a block diagram of a remote access facilitation network 10. The remote access facilitation network 10 includes a base computing equipment environment 12 having a data terminal 14 and a control and activation device 16. The base computing equipment environment 12 may be a private home or an office. The data terminal 14 may range from a personal computer (PC) up to a mainframe system providing virtual office building environment applications. The data terminal 14 may be a stand alone processor or may be a communication server on a corporate internet to allow for remote access to a corporate system network. The control and activation device 16 is coupled to the data terminal 14 by means of a data transmission network 26, e. g. a LAN (Local Area Network).

A remote user 18 wishes to activate or control the data terminal 14 by means of a WAP (Wireless Application Protocol) radiotelephone terminal 20. Communication between the radiotelephone terminal 20 of the remote user 18 and the data terminal 14 of the base computing equipment environment 12 occurs over one or more telecommunication networks 24, comprising a local network 22 and a remote network 23. The radiotelephone network 24 may, e. g., be a PLMN (Public Land Mobile Network). The remote network 23 may be a GSM (Global System for Mobile Communication) network or an UMTS (Universal Mobile Telecommunication Standard) network.

In operation, remote user 18 activates a remote access application programme from the WAP radiotelephone terminal 20. The application programme implements a WAP communication protocol to dial out to a BSS (Base Station Subsystem 28 through the remote network 23. Upon response by the base station subsystem 28, the radiotelephone terminal 20 transfers a WAP message to the base station subsystem 28.

From the base station subsystem 28 the WAP message is transmitted to the data terminal control and activation device 16 through the local network 22. The WAP message is converted by the activation and control device 16 into a message that can be interpreted by the data terminal 14. The WAP message may contain any kind of activation and control commands for the data terminal 14 which can be directly used to activate or control the data terminal 14 and which can be directly executed by the data terminal 14. Alternatively, a number of scripts comprising commands for activating and controlling the data terminal 14 are stored in the activation and control device 16. One of these scripts can be selected depending on the content of the WAP message. Then the commands of the selected script are sent to the data terminal 14, where they are executed in order to activate or control the data terminal 14.

The data terminal activation and control device 16 comprises gateway functions 30 for connecting the activation and control device 16 to the local network 22 to the data transmission network 26. According to the present invention the activation and control device 16 can understand WAP push requests and can send messages to the WAP radiotelephone terminal 20 upon request. These messages may contain information about the status of the data terminal 14 and/or the status of command execution. The message supplied by the data terminal 14 is converted into a WAP message. The means for converting the message supplied by the data terminal 14 into a WAP message and the means for converting a WAP message supplied by the radiotelephone terminal 20 into a message that can be interpreted by the data terminal 14 are embodied in WAP server functions 32 of the data terminal activation and control device 16.

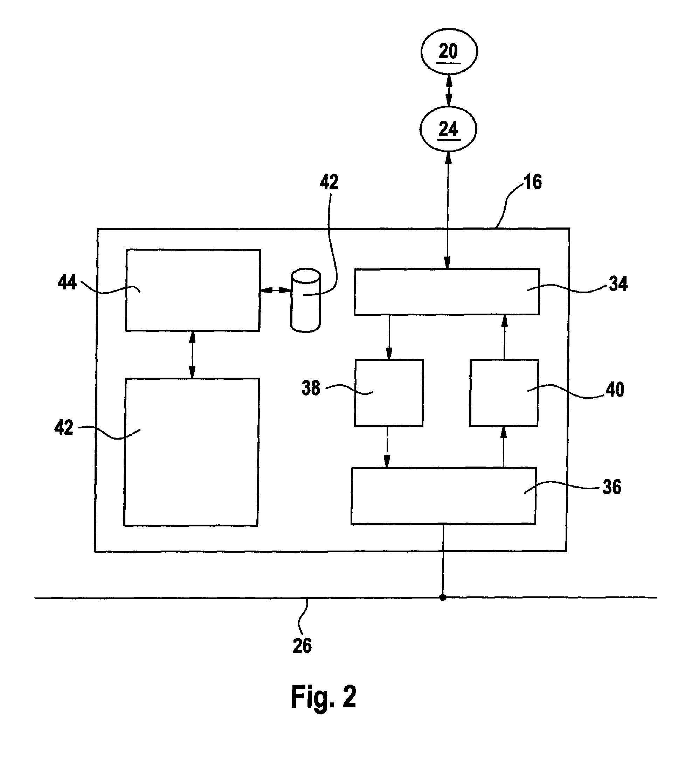

Figure 2 shows a block diagram of a data terminal control and activation device 16 used in the remote access facilitation network 10 of figure 1. The activation and control device 16 comprises means 34 for coupling the activation and control device 16 to the local network 22 of the radiotelephone network 24. Furthermore, the activation and control device 16 comprises means 36 for coupling the activation and control device 16 to the data transmission network 26. The means 34 may be a gateway. The means 36 could be a LAN server. Furthermore, the data terminal activation and control device 16 comprises means 38 for converting a WAP message supplied by the radiotelephone terminal 20 into a message that can be interpreted by the data terminal 14 and means 40 for converting a message supplied by the data terminal 14 into a WAP message. The activation and control device 16 is provided with storing means 42 and a microprocessor 44. The storing means may be electronic, optical or magnetic data storing devices (e. g. hard disk, CD-ROM). Alternatively they may be memory devices (e. g. RAM, ROM or flash-memory). Various scripts comprising commands for activating and controlling the data terminal 14 are stored in the storing means 42. Depending on the content of the WAP message supplied by the radiotelephone terminal 20 one of the scripts is selected and the commands contained therein forwarded to the data terminal 14, where they are executed in order to activate and/or control the data terminal 14.

## Claims

**1.** Data terminal activation and control device (16) for enabling a WAP (Wireless Application Protocol) radiotelephone terminal (20) to remotely activate and control a distant data terminal (14) coupled to the activation and control device (16) by means of a data transmission network (26), the activation and control device (16) being coupled to the radiotelephone terminal (20) across a radiotelephone network (24), **characterized in that** the data terminal activation and control device (16) comprises:
- means (36) for coupling the activation and control device (16) to said data transmission network (26);
- means (36) for coupling the activation and control device (16) to said radiotelephone network (24) ;
- means (40) for converting a message supplied by the data terminal (14) into a WAP message and sending it to the radiotelephone terminal (20); and
- means (38) for converting a WAP message supplied by the radiotelephone terminal (20) into a message that can be interpreted by the data terminal (14), and sending it to said data terminal (14).

**2.** Data terminal activation and control device (16) according to claim 1, **characterized in that** the data transmission network (26) is a LAN (Local Area Network).

**3.** Data terminal activation and control device (16) according to claim 1 or 2, **characterized in that** the radiotelephone network (24) is a GSM (Global System for Mobile Communication) network.

**4.** Data terminal activation and control device (16) according to claim 1 or 2, **characterized in that** the radiotelephone network (24) is an UMTS (Universal Mobile Telecommunication Standard) network.

**6.** Data terminal activation and control device (16) according to one of the preceding claims, **characterized in that** the means (38) for converting the WAP message comprise a WAP server (32).

**7.** Data terminal activation and control device (16) according to one of the preceding claims, **characterized in that** the means (40) for converting the message comprise a WAP server (32).

**8.** Data terminal activation and control device (16) according to claim 6, **characterized in that** the WAP server (32) comprises means (42) for storing various scripts for controlling the data terminal (14), means for selecting at least one of the scripts depending on the content of the WAP message and means for executing the at least one selected script in order to control the distant data terminal (14).

**9.** WAP (Wireless Application Protocol) server (32) for enabling a WAP radiotelephone terminal (20) to remotely activate and control a distant data terminal (14) coupled to the server (32) by means of a data transmission network (26), the server (32) being coupled to the radiotelephone terminal (20) by means of a gateway (30) across a radiotelephone network (24), **characterized in that** the WAP server (32) comprises:
- means (40) for storing various scripts for controlling the data terminal (14),
- means for selecting at least one of the scripts depending on the content of a WAP message supplied by the radiotelephone terminal (20) accross the radiotelephone network (24) ; and
- means for sending commands contained in the at least one selected script in order to control the distant data terminal (14).

**10.** Method for remotely activating and controlling a distant data terminal (14) by means of a WAP (Wireless Application Protocol) radiotelephone terminal (20) comprising the steps of:
- sending a WAP message from the radiotelephone terminal (20) to a data terminal activation and control device (16) across a radiotelephone network (24) ;
- converting the WAP message into a message that can be interpreted by the data terminal (14), and sending it to said data terminal (14); and
- converting a message supplied by the data terminal (14) into a WAP message and sending it to the WAP radotelephone terminal (20).
